# EUROPÄISCHE PATENTSCHRIFT

(11) **EP 0 504 766 B1**
(45) Veröffentlichungstag und Bekanntmachung des Hinweises auf die Patenterteilung: **20.12.1995**
(21) Anmeldenummer: 92104460.8
(22) Anmeldetag: 16.03.1992
(51) Int. Cl.: H02K 1/18

(54) **Vertikale elektrische Synchronmaschine grossen Durchmessers**
Vertical electric synchronous machine having a large diameter
Machine électrique synchrone verticale de grand diamètre

(30) Priorität: 19.03.1991 DE 4108904
(43) Veröffentlichungstag der Anmeldung: 23.09.1992
(73) Patentinhaber: VEM-Elektroantriebe GmbH, D-01259 Dresden (DE)
(72) Erfinder: Höltzel, Horst, O-8019 Dresden (DE)

(56) Entgegenhaltungen:
- DE-C- 657 790
- FR-A- 2 199 916
- US-A- 3 988 622

## Beschreibung

Die Erfindung betrifft eine vertikale elektrische Synchronmaschine großen Durchmessers insbesondere Wasserkraftgenerator, deren Ständerblechpaket radial mit am Umfang verteilten Führungsschienen befestigt ist und über getrennte Preßsegmente auf den Ständerzwischenwänden aufliegt, wobei das Ständerblechpaket mit von den Führungsschienen getrennt angeordneten Preßbolzen über beidseitig vorhandene (untere und obere) Preßsegmente verspannt ist.

In der DE 657 790 ist eine vertikale elektrische Synchronmaschine großen Durchmessers beschrieben, deren Ständerblechpaket radial mit am Umfang verteilten Führungsschienen befestigt ist und über getrennte Preßsegmente auf den Ständerzwischenwänden aufliegt. Das Ständerblechpaket ist mit von den Führungsschienen getrennt angeordneten Preßbolzen über untere und obere Preßsegmente verspannt. An den unteren und oberen Preßsegmenten sind nachgiebige Rollen angeordnet, die es den Preßsegmenten erlauben, einer durch Wärmeausdehnung hervorgerufenen radialen Bewegung des Blechpaketes zu folgen. Die radiale Ausdehnung des Ständerblechpaketes wird durch nachgiebig ausgeführte Ständerzwischenwände ermöglicht.

Aus der FR 2 199 916 sind schwalbenschwanzförmige Stangen bzw. Führungsschienen für die Übertragung der durch das Drehmoment hervorgerufenen Tangentialkräfte und die radiale Führung des Ständerblechpaketes bei Erhaltung der Möglichkeit dessen radialer Ausdehnung bekannt.

Bekannt ist weiterhin eine Befestigungsart für das Ständerblechpaket einer Synchronmaschine aus der DE-OS 38 08 806 mittels radial vorgespannten Blechlamellen, die eine Wärmedehnung zulassen. Eine derartige Befestigungsweise ist technisch sehr aufwendig.

Weiterhin ist eine Befestigung der Führungsschienen des Ständerblechpaketes an den Ständerzwischenwänden mit Hilfe angeschweißter Federbügel aus dem DD-WP 243 150 bekannt, die aber den Nachteil der Schweißeinflüsse an den höchstbeanspruchten Federstellen und rechnerisch schwer erfaßbare Schwingungserscheinungen hat. Gerade die Beherrschung und genaue Kenntnis der Schwingungserscheinungen ist aber für den Betrieb eines Synchongenerators wichtig.

Im Zusammenhang mit einer Läuferkonstruktion einer großen Synchronmaschine ist aus der DE-OS 32 29 935 eine technische Lösung bekannt, bei der axial ausgleichende und radial gleitende Schichtbeilagen zwischen Tragbalken und Blechkette so angeordnet sind, daß sie einen axialen Toleranzausgleich und radiale Relativbewegungen ermöglichen. Eine Umfangskarftübertragung mit kraftschlüssiger Verbindung zur Tragkonstruktion ist damit nicht möglich.

Beim Betrieb vertikaler elektrischer Maschinen großen Durchmessers treten erhebliche radiale und tangentiale Kräfte zwischen Ständerblechpaket und Ständergehäuse auf. Radiale Kräfte werden durch magnetischen Zug in Richtung der Achse der Maschine und durch das Temperaturverhalten des Ständerblechpaketes nach außen erzeugt. So führen Übertemperaturen bei starrer Befestigung zur Welligkeit des Blechpaketes. Große tangentiale Kräfte werden durch das zu übertragende Drehmoment vom Blechpaket auf das Ständergehäuse wirksam.

Der Erfindung liegt die Aufgabe zugrunde, bei vertikalen elektrischen Maschinen großen Durchmessers eine einfache Befestigungsart zwischen Ständerblechpaket und Ständergehäuse zu finden, die einerseits die radiale Bewegung zwischen beiden zuläßt und andererseits zugleich die notwendige Starrheit besitzt, um die großen tangentialen Kräfte vom Ständerblechpaket auf das Ständergehäuse zu übertragen.

Erfindungsgemäß wird die Aufgabe bei einer vertikalen Synchronmaschine großen Durchmessers wie eingangs beschrieben dadurch gelöst, daß zwischen dem oberen Preßsegment 2 und der äußeren Ständerzwischenwand 14 zwei Gleitringe 4 angeordnet sind, die in Führungsringen 5 geführt sind, die wiederum außen auf der Ständerzwischenwand 14 aufgeschweißt sind.

Zwischen äußerer Ständerzwischenwand 14 und unterem Preßsegment 3, ist nur ein Gleitring 4, der in einem außen aufgeschweißten Führungsring 5 geführt ist, angeordnet. Das obere Preßsegment 2 ist über eine zusätzliche Anzahl von Befestigungsschrauben 8 mit auf dem Preßsegment 2 aufliegenden Gleitunterlegscheiben 9 mit der äußeren Ständerzwischenwand 14 funktionsfest verspannt. Die Gleitringe 4 und die Gleitunterlegscheiben 9 bestehen vorzugsweise aus einem gleitfähigen Werkstoff, insbesondere Messing, wobei auch gleitfähige hochfeste Kunststoffe eingesetzt werden können.

Diese Anordnung sichert die radiale Beweglichkeit des gesamten Blechpaketes gegenüber der Ständerzwischenwand 14 und verhindert gleichzeitig das axiale Abkippen des Blechpaketes.

Die Übertragung der durch das Drehmoment hervorgerufenen Tangentialkräfte und die radiale Führung des Ständerblechpaketes 1 übernehmen die an der in Form eines Schwalbenschwanzes ausgebildeten Führungsschiene 10 angeordneten breiten seitlichen parallelen Führungsflächen 11. Im kalten Zustand ist zwischen Ständerblechpaket 1 und Führungsschiene 10 eine definierte radiale Dehnungsfuge 12 angeordnet. Mit Erwärmung beginnt sich die Dehnungsfuge 12 zu schließen. Bei maximal auftretender Temperaturdifferenz zwischen Ständerblechpaket 1 und Maschinengehäuse schließt sich die Dehnungsfuge 12 ganz. Da die Erwärmung nicht überall im Ständerblechpaket 1 gleichmäßig erfolgt, führen die jeweils bereits geschlossenen radialen Dehnungsfugen 12 zu einer Selbstzentrierung des Ständerblechpaketes 1 bezogen auf die Maschinenachse.

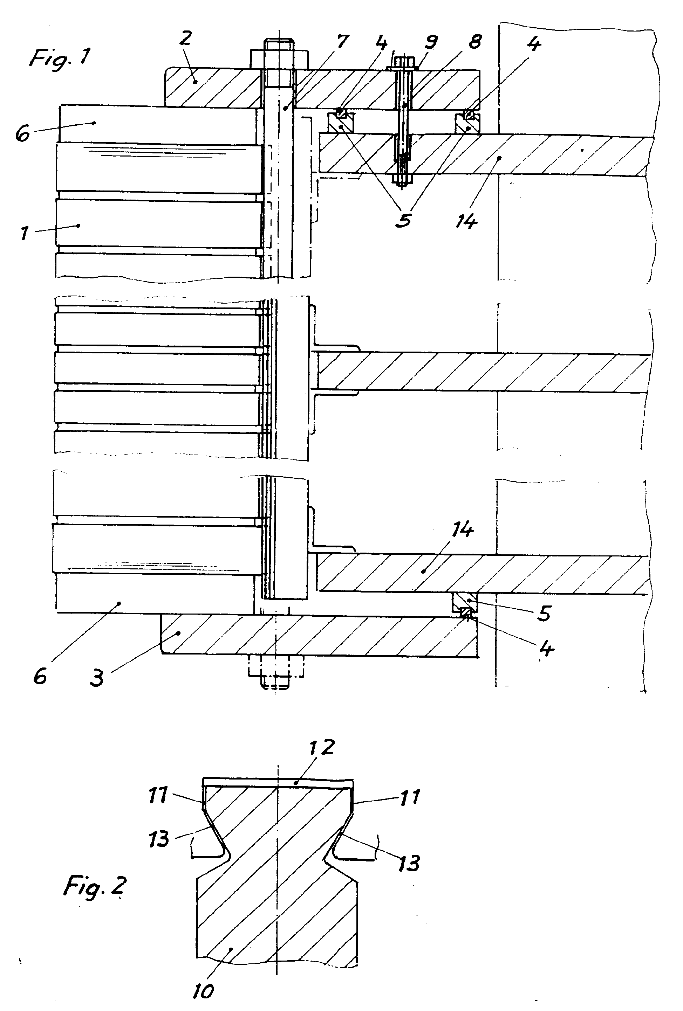

Die erfindungsgemäße Anordnung sichert sowohl die radiale Beweglichkeit mittels der Gleitringe 4 als auch die eigentlich dadurch ausgeschlossene Starrheit der Konstruktion. Sie verhindert bei maximaler Erwärmung das Entstehen von Blechwelligkeit, d. h. von Wicklungsschäden und vereinfacht die Herstellung und den Einbau des gesamten in der Regel geteilten Synchrongeneratorständers. Die Erfindung soll an Hand der Figuren 1 und 2 in einem Ausführungsbeispiel näher erläutert werden.

Die Figur 1 zeigt die erfindungsgemäße Befestigung des Ständerblechpaketes 1 eines vertikalen elektrischen Synchrongenerators großen Durchmessers mit der Ständerzwischenwand 14 des Generatorgehäuses. Die radiale Beweglichkeit wird mit Hilfe der Gleitringe 4 und der Gleitunterlegscheiben 9 ermöglicht. Sie bestehen aus Messing und sind mit einer zusätzlichen Gleitschicht versehen. Das gesamte Ständerblechpaket 1 mit oberen und unteren Preßsegmenten 6, die die durch den Preßbolzen 7 erzeugte axiale Preßkraft über die Druckfinger 6 auf das segmentierte Ständerblechpaket 1 übertragen, wird durch das obere Preßsegment 2 durch einen inneren und äußeren Gleitring 4 getragen. Die funktionsfest angezogenen Befestigungsschrauben 8 und die Gleitunterlegscheibe 9 verhindern ein Abkippen der gesamten Anordnung. So ist beim Setzen des Blechpaketes im umgedrehten Ständer der obere Preßring 2 die untere planparallele Auflage für das Ständerblechpaket 1. Der untere Preßring 3 mit dem unteren Gleitring 4 sichert außer der radialen Beweglichkeit auch die notwendige Justierung und Starrheit des Ständerblechpaketes 1. Die Gleitringe 4 sind in zugeordneten Führungsringen 5, die außen auf die Ständerzwischenwände 14 aufgeschweißt sind, fixiert.

Figur 2 zeigt die erfindungsgemäße Befestigung des Ständerblechpaketes 1 im Generatorgehäuse. Sie dient dessen radialer Führung und der Ableitung der Tangentialkräfte. Die schwalbenschwanzförmig ausgebildete Führungsschiene 10 hat zwei breite seitlich angeordnete planparallele Führungsflächen 11. Diese breiten Führungsflächen 11 übernehmen die Momentenübertragung und sichern die radiale Verschiebbarkeit des Ständerblechpaketes 1 auf der Führungsschiene 10. Zwischen beiden ist die definierte radiale Dehnfuge 12 angeordnet. Sie ist so berechnet, daß sie sich bei maximal auftretender Temperaturdifferenz zwischen Ständerblechpaket 1 und Generatorgehäuse ganz schließt. Die geschlossene radiale Dehnfuge 12 zentriert das Ständerblechpaket 1 zur Generatorachse bei dessen ungleichmäßigen Erwärmung und verhindert zuverlässig einen ungleichmäßigen Luftspalt zwischen Ständer und Läufer. Beim Erkalten verhindern die Schwalbenschwanzflanken 13 eine unzulässige Lageveränderung des Ständerblechpaketes 1, d. h. der Luftspalt wird gleichmäßig eingestellt.

## Patentansprüche

1. Vertikale elektrische Synchronmaschine großen Durchmessers, insbesondere Wasserkraftgenerator, deren Ständerblechpaket radial mit am Umfang verteilten Führungsschienen befestigt ist und über getrennte Preßsegmente auf den Ständerzwischenwänden aufliegt,
wobei das Ständerblechpaket mit von den Führungsschienen getrennt angeordneten Preßbolzen über untere und obere Preßsegmente verspannt ist, dadurch gekennzeichnet,
daß zwischen unteren und oberen Preßsegmenten (2 bzw. 3) und Ständerzwischenwänden (14) unten ein Gleitring (4) und oben zwei Gleitringe (4), die in je einem Führungsring (5) geführt sind, angeordnet sind,
das obere Preßsegment (2) mit der äußeren Ständerzwischenwand (14) über eine zusätzliche Anzahl von Befestigungsschrauben (8) mit je einer Gleitunterlegscheibe (9) verbunden ist, die Führungsschienen (10) in Form eines Schwalbenschwanzes mit breiten seitlichen parallelen Führungsflächen (11) ausgebildet sind und im kalten Zustand zwischen Ständerblechpaket (1) und Führungsschiene (10) eine definierte radiale Dehnfuge (12) angeordnet ist.

2. Vertikale elektrische Synchronmaschine großen Durchmessers nach Anspruch 1 dadurch gekennzeichnet,
daß die Gleitringe (4) und die Gleitunterlegscheiben (9) aus einem gleitfähigen Werkstoff insbesondere aus Messing bestehen.

## Claims

1. Vertical electrical synchronous machine of a large diameter, especially hydraulic generators, whose stator lamination bundle is fastened at various parts of the cirumference by guide rails, being held onto the parting stator walls by separate press segments,
whereby the stator lamination bundle is braced over lower and upper press segments by slugs which are arranged separately from the guide rail,
featuring one lower gliding ring (4) and two upper gliding rings (4) lead in one guide ring (5) each and arranged between the bottom and the upper press segments (2 and 3 respectively) and the stator parting wall,
whereby the upper press segment (2) is attached to the outer stator wall (14) through an additional number of fastening screws (8) with one sliding washer (9) each,
the guide rails (10) being designed in the form of a dovetail with wide, laterally parallel guide surfaces (11)
and with a defined radial extending joint (12) being arranged in a cold state between the stator lamination bundle (1) and the guide rail (10).

2. Vertical electrical synchronous machine of a large diameter according to claim 1, featuring
gliding rings (4) and gliding washers (9) made from a material of gliding quality, especially out of brass.

## Revendications

1. La machine synchrone électrique verticale de grand diamètre, notamment la génératrice hydraulique, dont les tôleries statoriques sont fixées par des rails de guidage répartis radialement sur la circonférence et qui repose sur les cloisons du stator par des segments de serrage séparés;
notons que les tôleries statoriques sont montées sur les segments de serrage inférieur et supérieur par des boulons de serrage ordonnés indépendamment des rails de guidage,
qui se caractérise, entre les segments de serrage inférieur et supérieur (2, voire 3) et les cloisons des tôleries
statoriques (14), par un anneau de glissement (4) en bas et deux anneaux de glissement (4) en haut passant chacun par un anneau de guidage (5),
le segment de serrage supérieur (2) est fixé sur la cloison extérieure du stator (14) par un nombre supplémentaire de vis de fixation (8) comprenant chacune une rondelle de coulissage (9),
le rail de guidage (10) en forme de queue d'aronde ayant des surfaces de guidage latérales larges (11) et un joint radial extensible (12) disposé, à l'état froid, entre les tôleries statoriques (1) et le rail de guidage (10).

2. La machine synchrone électrique verticale de grand diamètre, conformément à la demande n° 1 qui se caractérise par
des anneaux de glissage (4) et des rondelles de coulissage (9) faits dans une matière glissante, notamment le laiton.
